# EUROPEAN PATENT APPLICATION

(11) **EP 2 410 482 A1**
(43) Date of publication of application: **25.01.2012**
(21) Application number: 11174721.8
(22) Date of filing: 20.07.2011
(51) Int. Cl.: G06Q 30/00, H04M 1/725, G06F 17/30

(54) **Mobile terminal and method of controlling operation of a mobile**

(30) Priority: 21.07.2010 KR 20100070596
(71) Applicant: LG Electronics, Seoul, 150-721 (KR)
(72) Inventor: Kim, Youngsuk, 153-023 Seoul (KR); Namgung, Hyun, 153-023 Seoul (KR); Kim, Ilhyun, 153-023 Seoul (KR); Jung, Eunyoung, 153-023 Seoul (KR)
(74) Representative: TER MEER - STEINMEISTER & PARTNER GbR

(57) **Abstract**

A mobile terminal and a method of controlling operation of a mobile terminal are provided. According to one embodiment, a method includes: accessing a webstore; searching the webstore to locate applications that meet a predefined application recommendation condition; and controlling a display module to display an application selection screen to facilitate downloading of one of the located applications. In this way, it is possible to allow a user to more quickly search for and download desired applications from a webstore.

## Description

### CROSS-REFERENCE TO RELATED APPLICATION

Pursuant to 35 U.S.C. § 119(a), this application claims the benefit of earlier filing date and right of priority to Korean Patent Application No. 10-2010-0070596, filed on July 21, 2010

### Field of the Invention

Embodiments of the present invention relate to a mobile terminal and a method of controlling operation of a mobile terminal, and, more particularly, to a mobile terminal that can provide a function of recommending applications that meet a predefined condition when a user accesses a webstore and a method of controlling operation of the mobile terminal.

### Description of the Related Art

Mobile terminals are portable devices that can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless Internet services. Thus, mobile terminals have evolved into multimedia players.

Users can surf on the Internet, chat with friends or coworkers, or send or receive emails using their mobile terminals. Smart phones, which are equipped with an operating system, allow users to download various applications from webstores.

However, since there are a considerable number of applications available for download, especially in webstores such as Android Market, it generally takes time and effort to search for and download desired applications.

Therefore, a method is needed to provide users with a list of recommendations that meet a predefined condition upon access to a webstore in order to facilitate the search of desired applications.

### SUMMARY

Embodiments of the present invention provide a mobile terminal that can provide a function of recommending applications that meet a predefined condition when a user accesses a webstore and a method of controlling operation of the mobile terminal.

According to one embodiment, a method of controlling operation of a mobile terminal includes: accessing a webstore; searching the webstore to locate applications that meet a predefined application recommendation condition; and controlling a display module to display an application selection screen to facilitate downloading of one of the located applications.

According to another embodiment of the present invention, a mobile terminal includes: a wireless communication unit for providing an interface for accessing a webstore via the Internet; a display module for displaying information; and a controller for accessing the webstore via the wireless communication unit, searching the webstore to locate applications that meet a predefined application recommendation condition, and controlling the display module to display an application selection screen to facilitate downloading of one of the located applications.

### BRIEF DESCRIPTION OF THE DRAWINGS

The above and other features and aspects according to embodiments of the present invention will become more apparent by describing in detail particular embodiments with reference to the attached drawings in which:
FIG. 1 is a block diagram of a mobile terminal according to an embodiment of the present invention;
FIG. 2 is a front perspective view of a mobile terminal according to an embodiment of the present invention;
FIG. 3 is a rear perspective view of a mobile terminal according to an embodiment of the present invention;
FIG. 4 is a flowchart of a method of controlling operation of a mobile terminal, according to an embodiment of the present invention;
FIG. 5 is a view of a typical application selection screen; and
FIGS. 6, 7 and 8 are views of application selection screens according to embodiments of the present invention.

### DETAILED DESCRIPTION

Embodiments of the present invention will hereinafter be described in more detail with reference to the accompanying drawings in which particular embodiments of the invention are illustrated.

The term 'mobile terminal', as used herein, may refer to a mobile phone, a smart phone, a laptop computer, a digital broadcast receiver, a personal digital assistant (PDA), a portable multimedia player (PMP), a navigation device, a tablet computer, or an electronic book (e-book) reader. In this disclosure, the terms 'module' and 'unit' can be used interchangeably.

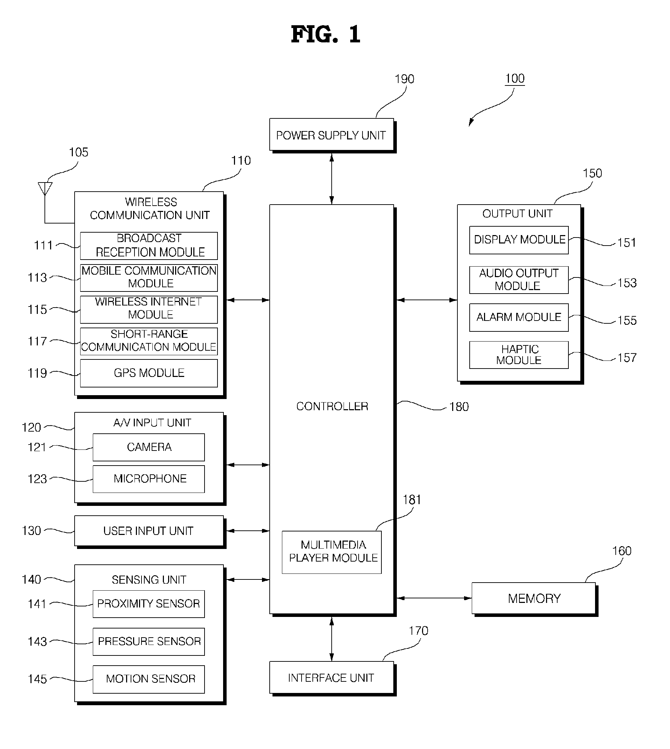

FIG. 1 is a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit, or some of the wireless communication unit, the A/V input unit, the user input unit, the sensing unit, the output unit, the memory, the interface unit, the controller, and the power supply unit may be divided into two or more smaller units.

The wireless communication unit 110 may include a broadcast reception module 111, a mobile communication module 113, a wireless Internet module 115, a short-range communication module 117, and a global positioning system (GPS) module 119.

The broadcast reception module 111 may receive a broadcast signal and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information, or may be a server which receives and then transmits previously-generated broadcast signals and/or previously-generated broadcast-related information. The broadcast signal and/or the broadcast-related information received by the broadcast reception module 111 may be stored in the memory 160.

The broadcast-related information may include broadcast channel information, broadcast program information and/or broadcast service provider information. The broadcast signal may be a TV broadcast signal, a radio broadcast signal, a data broadcast signal, a combination of a data broadcast signal and a TV broadcast signal or a combination of a data broadcast signal and a radio broadcast signal.

The broadcast-related information may be provided to the mobile terminal 100 through a mobile communication network. In this case, the broadcast-related information may be received by the mobile communication module 113, rather than by the broadcast reception module 111.

The broadcast-related information may be implemented in various forms. For example, the broadcast-related information may be implemented in an electronic program guide (EPG) of digital multimedia broadcasting (DMB) or may be implemented in an electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO^{™}), DVB-H, and integrated services digital broadcast-terrestrial (ISDB-T). In addition, the broadcast reception module 111 may be configured to be suitable for many other types of broadcasting systems.

The mobile communication module 113 may transmit wireless signals to or receive wireless signals from at least a base station, an external terminal, or a server through a mobile communication network. The wireless signals may include various types of data according to whether the mobile terminal 100 transmits/receives voice call signals, video call signals, or text/multimedia messages.

The wireless Internet module 115 may facilitate wirelessly accessing the Internet. The wireless Internet module 115 may be embedded in the mobile terminal 100 or may be installed in an external device. The wireless Internet module 115 may use various wireless Internet technologies such as wireless local area network (WLAN), Wireless Broadband (WiBro^{™}), World Interoperability for Microwave Access (Wimax^{™}), and High Speed Downlink Packet Access (HSDPA).

The short-range communication module 117 may facilitate short-range communication. The short-range communication module 117 may use various short-range communication techniques such as Bluetooth^{™}, radio frequency identification (RFID), infrared data association (IrDA), ultra wideband (UWB), and ZigBee^{™}.

The GPS module 119 may receive position information from a plurality of GPS satellites.

The A/V input unit 120 may receive audio signals or video signals. The A/V input unit 120 may include a camera 121 and a microphone 123. The camera 121 may process various image frames, such as still images or moving images captured by an image sensor during an image capturing mode or a video call mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, or a voice recognition mode and may convert the sound signals into electronic audio data. In the call mode, the mobile communication module 113 may convert the electronic audio data into data that can be readily transmitted to a mobile communication base station and then output the converted data. The microphone 123 may use various noise removal algorithms to remove noise that is generated during the reception of external sound signals.

The user input unit 130 may generate key input data based on input by a user for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Alternatively, the user input unit 130 may be implemented as a finger mouse. If the user input unit 130 is implemented as a touch pad and forms a mutual layer structure with the display module 151, the user input unit 130 and the display module 151 may be collectively referred to as a touch screen.

The sensing unit 140 determines a current state of the mobile terminal 100 such as whether the mobile terminal 100 is opened or closed, the position of the mobile terminal 100 and whether the mobile terminal 100 is in contact with a user, and generates a sensing signal for controlling the operation of the mobile terminal 100. For example, when the mobile terminal 100 is a slider-type mobile phone, the sensing unit 140 may determine whether the mobile terminal 100 is opened or closed. In addition, the sensing unit 140 may determine whether the mobile terminal 100 is powered by the power supply unit 190 and whether the interface unit 170 is connected to an external device.

The sensing unit 140 may include a proximity sensor 141, a pressure sensor 143, and a motion sensor 145. The proximity sensor 141 may sense the presence of an object nearby that is approaching the mobile terminal 100 without requiring any mechanical or physical contact with the object. More specifically, the proximity sensor 141 may detect the presence of an object that is nearby and approaching by detecting a change in an alternating magnetic field or a rate of change of static capacitance. The sensing unit 140 may include two or more proximity sensors 141.

The pressure sensor 143 may determine whether pressure is being applied to the mobile terminal 100 or may measure the level of pressure, if any, that is applied to the mobile terminal 100. The pressure sensor 143 may be installed in a certain part of the mobile terminal 100 where the detection of pressure is, or may be, necessary.

For example, the pressure sensor 143 may be installed in the display module 151. In this case, it is possible to differentiate a typical touch input from a pressure touch input, which is generated using a higher degree of pressure than that used to generate a typical touch input, based on data provided by the pressure sensor 143. In addition, when a pressure touch input is received through the display module 151, it is possible to determine the level of pressure applied to the display module 151 upon the detection of the pressure touch input based on data provided by the pressure sensor 143.

The motion sensor 145 may determine the location and motion of the mobile terminal 100 using an acceleration sensor or a gyro sensor. Acceleration sensors are for converting a vibration in acceleration into an electric signal. With recent developments in micro-electromechanical system (MEMS) technology, acceleration sensors have been widely used in various products for various purposes ranging from detecting large motions or movements, such as car collisions as performed in automobile airbag systems, to detecting minute motions, such as the motion of a hand as performed in gaming input devices.

In general, one or more acceleration sensors representing two or three axial directions may be incorporated into a single package. There are some cases where the detection of motions in only one axial direction, such as a Z-axis direction, is necessary. Thus, when an X- or Y-axis acceleration sensor is required instead of a Z-axis acceleration sensor, the X- or Y-axis acceleration sensor may be mounted on an additional substrate that may be mounted on a main substrate.

Gyro sensors are for measuring angular velocity, and may determine the direction of a rotation of the mobile terminal 100 relative to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is operating in a call mode, the display module 151 may display a user interface (UI) or a graphic user interface (GUI) for making or receiving a call. If the mobile terminal 100 is operating in a video call mode or an image capturing mode, the display module 151 may display a UI or a GUI for capturing or receiving images.

If the display module 151 and the user input unit 130 form a layer structure together such as a mutual layer structure, and are implemented as a touch screen, the display module 151 may be used as both an output device and an input device. If the display module 151 is implemented as a touch screen, the display module may also include a touch screen panel and a touch screen panel controller.

The touch screen panel may be a transparent panel attached to the exterior of the mobile terminal 100 and may be connected to an internal bus of the mobile terminal 100. The touch screen panel continuously monitors whether the touch screen panel is being touched by the user.

Once a touch input to the touch screen panel is received, the touch screen panel transmits a number of signals corresponding to the touch input to a touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide a resolution as high as ordinary ink on paper, wide viewing angles, and excellent visual properties.

E-paper can be implemented on various types of substrates such as a plastic, a metallic or a paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, electrophoretic deposition, or microcapsules.

The display module 151 may include at least a liquid crystal display (LCD), a thin film transistor (TFT)-LCD, an organic light-emitting diode (OLED), a flexible display, or a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data located in the memory 160. In addition, the audio output module 153 may output various sound signals associated with the functions of the mobile terminal 100 such as the receiving of a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal.

More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects, such as vibration, that can be perceived by the user. If the haptic module 157 generates vibration as a haptic effect, the intensity and the pattern of vibration generated by the haptic module 157 may be altered in various ways. The haptic module 157 may synthesize different vibration effects and may output the result of the synthesization. Alternatively, the haptic module 157 may sequentially output different vibration effects.

The haptic module 157 may provide various haptic effects, other than vibration. For example, a haptic effect simulating a pin array that moves perpendicularly to a contact skin surface, a haptic effect simulating injecting air through an injection hole or or sucking in air through a suction hole, a haptic effect providing or simulating a stimulus to the surface of the skin, a haptic effect providing or simulating contact with an electrode, a haptic effect obtained using an electrostatic force, or a haptic effect obtained by stimulating the sensing of heat or cold using a device capable of absorbing heat or generating heat may be provided.

The haptic module 157 may be configured to cause the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least a flash memory type storage medium, a hard disk type storage medium, a multimedia card micro type storage medium, a card type memory (e.g., a secure digital (SD) or extreme digital (XD) memory), a random access memory (RAM), or a read-only memory (ROM). The mobile terminal 100 may operate a web storage, which performs storage functions of the memory 160 on the Internet.

The interface unit 170 may interface with an external device that can be connected to the mobile terminal 100. The interface unit 170 may be a wired/wireless headset, an external battery charger, a wired/wireless data port, an audio input/output (I/O) terminal, a video I/O terminal, an earphone, or a card socket for a memory card, a subscriber identification module (SIM) card or a user identity module (UIM) card.

The interface unit 170 may receive data from an external device or may be powered by an external device. The interface unit 170 may transmit data provided by an external device to other components in the mobile terminal 100 or may transmit data provided by other components in the mobile terminal 100 to an external device. When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call.

The controller 180 may include a multimedia player module 181, which plays multimedia data. The multimedia player module 181 may be implemented as a hardware device or module and may be installed in the controller 180. Alternatively, the multimedia player module 181 may be implemented as a software program.

The power supply unit 190 may be supplied with power from an external power source or an internal power source. The power supply unit 190 may supply power to the other components in the mobile terminal 100.

The mobile terminal 100 may operate in a wired/wireless communication system or a satellite communication system. Therefore, the mobile terminal 100 may be able to operate in a communication system capable of transmitting data in units of frames or packets.

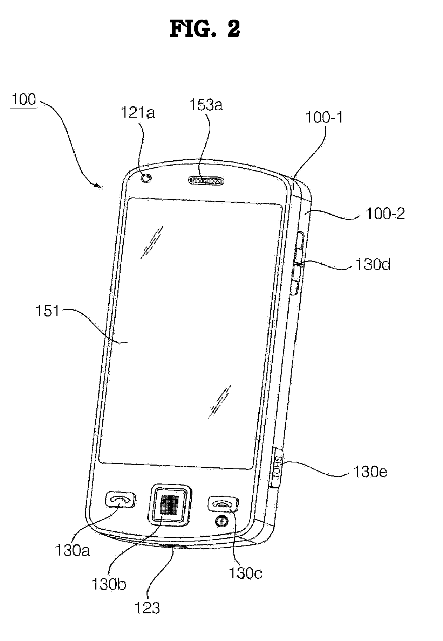

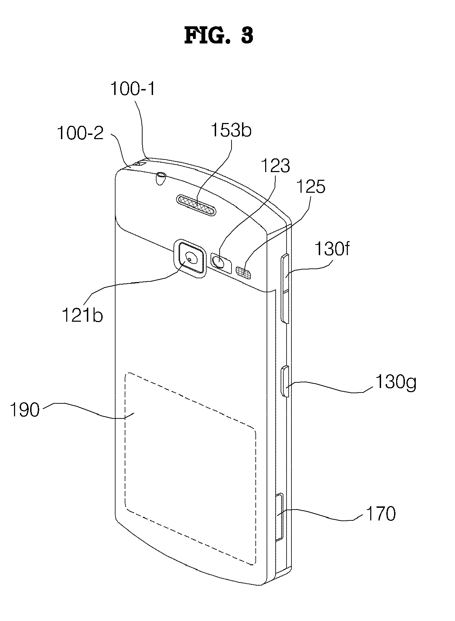

The exterior structure of the mobile terminal 100 will be described in more detail with reference to FIGS. 2 and 3. Embodiments of the present invention can be applied to many types of mobile terminals such as a folder-type, a bar-type, a swing-type and a slider-type mobile terminal. However, for convenience of description, embodiments will be described with reference to a bar-type mobile terminal 100 equipped with a full touch screen. FIG. 2 is a front perspective view of the mobile terminal 100 and FIG. 3 is a rear perspective view of the mobile terminal.

Referring to FIG. 2, the exterior of the mobile terminal 100 may be formed by a front case 100-1 and a rear case 100-2. Various electronic devices may be installed in the space or volume formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, a first camera 121 a, and first, second and third user input modules 130a, 130b and 130c may be disposed in the main body of the mobile terminal 100, specifically on the front case 100-1. Fourth and fifth user input modules 130d and 130e and the microphone 123 may be disposed on sides of the rear case 100-2.

If a touch pad overlaps the display module 151 to form a mutual layer structure, the display module 151 may serve as a touch screen. In this way, the user can enter various pieces of information to the mobile terminal 100 simply by touching the display module 151.

The first audio output module 153a may be implemented as a receiver or a speaker. The first camera 121 a may be configured to be suitable for capturing a still or moving image of the user. The microphone 123 may be configured to receive the user's voice or other sounds.

The first through fifth user input modules 130a, 130b, 130c, 130d and 130e and sixth and seventh user input modules 130f and 130g (see, e.g., FIG. 3) may be collectively referred to as the user input unit 130. Any suitable mechanisms can be employed as the first through seventh user input modules 130a through 130f so long as these input modules may be operated in a tactile manner. For example, the user input unit 130 may be implemented as a dome switch or a touch pad that can receive a command or information according to a pressing or a touch operation by the user, as a wheel or jog dial for rotating a key, or as a joystick.

In terms of function, the first, second and third user input modules 130a, 130b and 130c may operate as function keys for making or receiving a call, moving a mouse pointer, scrolling on a screen, or entering a command such as start or end. The fourth user input module 130d may operate as a function key for facilitating selection of an operating mode for the mobile terminal 100. The fifth user input module 130e may operate as a hot key for activating a special function within the mobile terminal 100.

Referring to FIG. 3, a second camera 121 b may be additionally provided at the rear of the rear case 100-2. The sixth and seventh user input modules 130f and 130g and the interface unit 170 may be disposed on sides of the rear case 100-2.

The second camera 121b may have an image capture direction which is substantially the opposite to that of the first camera 121 a, and may have a different resolution from that of the first camera 121 a. A flash 123 and a mirror 125 may be disposed adjacent to the second camera 121b. When an image of a subject is captured with the second camera 121b, the flash 123 may illuminate the subject. The mirror 125 may allow the user to see himself or herself when it is desired to capture a self-image by using the second camera 121 b.

A second audio output module 1536 may be additionally provided on the rear case 100-2. The second audio output module 1536 may facilitate a stereo function along with the audio output module 153 on the front case 100-1. The second audio output module 1536 may also be used in a speaker-phone mode.

The interface unit 170 may be used as a passage allowing the mobile terminal 100 to exchange data with an external device either through a fixed line or wirelessly.

A broadcast signal reception antenna 105 (see, e.g., FIG. 1) may be disposed at one side of the front or rear case 100-1 or 100-2, in addition to an antenna used for call communication. The broadcast signal reception antenna 105 may be installed such that it can be extended from the front case 100-1 or rear case 100-2.

The power supply unit 190 may be mounted on the rear case 100-2 and may supply power to the mobile terminal 100. The power supply unit 190 may be, for example, a chargeable battery which can be detachably mounted to the rear case 100-2 for being charged.

The second camera 121 b and other elements that have been described as being provided on the rear case 100-2 may be provided on the front case 100-1. In addition, the first camera 121 a may be configured to be rotatable in order to facilitate image capturing in various directions. In this case, the second camera 121 b may be optional.

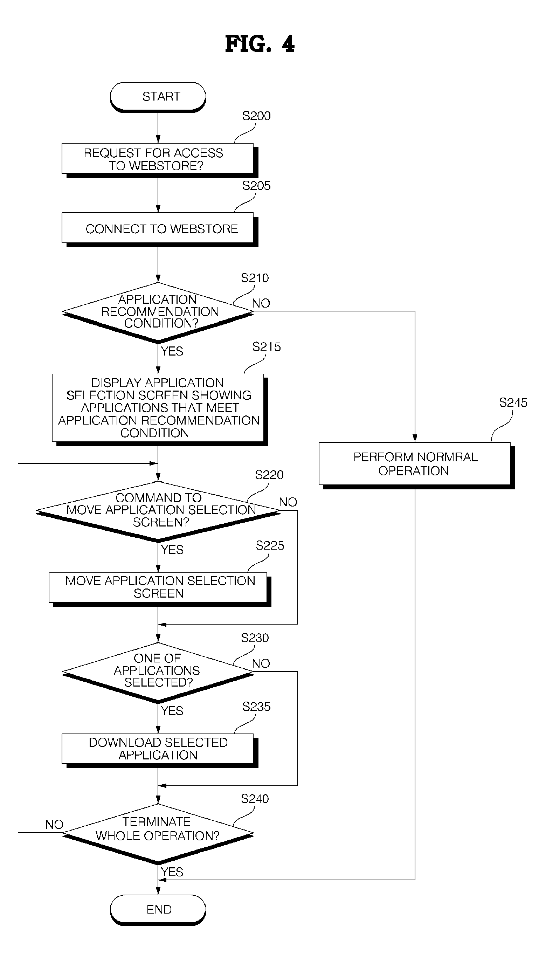

FIG. 4 illustrates a flowchart of a method of controlling operation of a mobile terminal, according to an embodiment of the present invention. Referring to FIG. 4, when a request for access to a webstore is issued in accordance with, for example, a user command (S200), the controller 180 controls the wireless Internet module 115 to access a predefined webstore (S205). The predefined webstore may be a website, such as App Store or Android Market, from which applications that can be executed in the mobile terminal 100 can be downloaded.

When connected to the predefined webstore, the controller 180 determines whether there is a condition (hereinafter referred to as an application recommendation condition) set in advance regarding the recommendation of applications (S210). If there is an application recommendation condition set in advance, the controller 180 searches the predefined webstore in order to locate applications that meet the application recommendation condition, selects at least one of the applications, and displays an application selection screen on the display module for downloading the selected application (S215). On the other hand, if there is no application recommendation condition set in advance for application recommendations, the controller 180 performs a normal operation that can be performed when the mobile terminal 100 is connected to a webstore (S245).

The application selection screen may show icons representing applications that can be downloaded and additional information, such as textual information, regarding each of the icons. The application recommendation condition may be set based on the time at which the webstore is accessed, a weather condition and/or the local weather at the time at which the webstore is accessed, or the location, such as a geographical location, at which the webstore is accessed. The application recommendation condition may also be set based on association with an event, augmented reality, or an accessory of the mobile terminal 100, as well as according to a user's preferences or demands.

The application recommendation condition may be set by the user in advance before the predefined webstore is accessed. A menu for setting an application recommendation condition may be provided. An application recommendation condition may be set differently for one webstore relative to another webstore.

If a command to move the application selection screen is issued in accordance with a user input (S220) such as a flick or a touch-and-drag, the controller 180 moves the application selection screen in response to the command (S225). For example, the controller 180 may scroll the application selection screen or may replace the application selection screen with another application selection screen.

If one of the applications listed on the application selection screen is selected (S230), the controller 180 controls the selected application to be downloaded (S235). The download of the selected application may involve entering payment information.

Operations S220, S225 and S230 may be repeatedly performed until the user chooses to terminate the access to the predefined webstore (S240). In this manner, it is possible to provide a list of recommended applications that are believed to be suitable for the user and to allow the user to quickly search for and download desired applications.

The recommendation of applications will now be described in more detail. Applications may be recommended based on the time, such as time of day and/or date, at which a webstore is accessed. For example, during the period between 6 a.m. and 9 a.m., applications related to news, e-book, magazines, radio broadcasts, and exercises, such as physical health exercises, may be recommended. During the period between 9 a.m. and 12 p.m. or between 2 p.m. and 6 p.m., applications related to business, dictionaries, stopwatches, voice recorders, or notepads may be recommended. During the period between 12 p.m. and 2 p.m., applications related to restaurants, coffee shops, music, and online shopping may be recommended. During the period between 8 p.m. and 12 a.m., applications related to games, sleep, chatting, and social networking may be recommended. On weekends, applications related to recipes, travel information, price comparison services, coupons, movies, and photos may be recommended.

Applications may be recommended based on a weather condition and/or the local weather at the time at which a webstore is accessed. For example, if the weather is good, applications related to outdoor visits or activities, such as parks, picnics or bicycling, may be recommended. If it is raining, applications related to games, such as games played indoors, may be recommended. If it is snowing, applications related to skiing may be recommended. If the temperature is hot, applications related to horror movies may be recommended.

During events or holidays, applications related to specific events or holidays may be recommended. For example, during events, such as the Olympics or the World Cup, or on holidays, such as Christmas, New Year's Day, or Thanksgiving Day, applications related to greeting cards, wall papers, or gift lists may be recommended.

Applications related to location information obtained using a Global Positioning System (GPS), Wireless Fidelity (WiFi^{™}), or base station information may be recommended. For example, when the mobile terminal 100 is located near a museum, applications related to museums may be recommended. When the mobile terminal 100 is located in a particular region, applications related to news events regarding the particular region may be recommended.

Applications may be recommended based on a type of an accessory with which the mobile terminal 100 is equipped. For example, when the mobile terminal 100 is equipped with a solar accessory, applications related to solar energy may be recommended. When the mobile terminal 100 is equipped with a SIM card, applications related to the copying or management of a SIM card may be recommended. When Bluetooth^{™} is turned on, applications for transmitting data via Bluetooth^{™} may be recommended. When the mobile terminal 100 is equipped with a secure digital (SD) card, applications related to a file manager may be recommended. When it is determined that images are stored in the SD card, applications related to an image editor may be recommended. When it is determined that music files are stored in the SD card, applications related to a music player may be recommended.

Applications may be recommended based on the user's preferences. For example, applications similar to applications either previously downloaded or for which attempts to download were made by the user may be recommended. For example, game applications similar to previously-downloaded game applications may be recommended.

Applications classified into or belonging to a category selected by the user may be recommended. For example, if a particular category of interest is selected by the user from an 'options' menu, applications classified into the particular category of interest may be recommended.

Applications related to augmented reality may be recommended when the user uses an augmented reality service. For example, when the user is shopping around a mall by using an augmented reality service, price comparison applications for providing different lists of prices for products sold at the mall may be recommended. If the user is browsing in a particular location, such as a museum, through an augmented reality service, applications related to the particular location may be recommended.

Alternatively, applications may be recommended randomly. For example, if the user selects a 'random recommendation' menu or requests a random recommendation, randomly-selected applications may be recommended in order to intrigue the user.

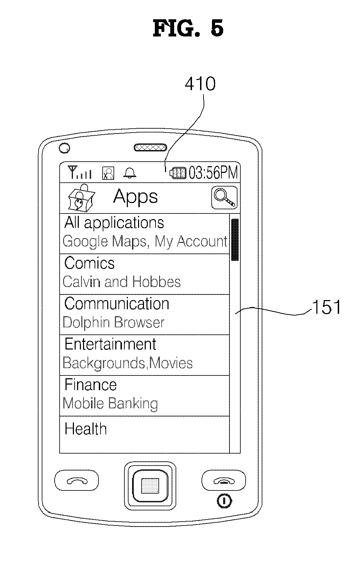

FIGS. 5 through 8 are views of application selection screens according to embodiments of the present invention.

FIG. 5 illustrates an example of a typical application selection screen. Referring to FIG. 5, when the mobile terminal 100 is connected to a webstore, such as Android Market, a display screen 410 for facilitating selection of a category of applications for display may be displayed on the display module 151. When one of the categories listed on the display screen 410 is selected, applications classified into the selected category may be displayed. When many applications are available, it may take a considerable amount of time to search through the applications. Therefore, it may be difficult to select a desired application.

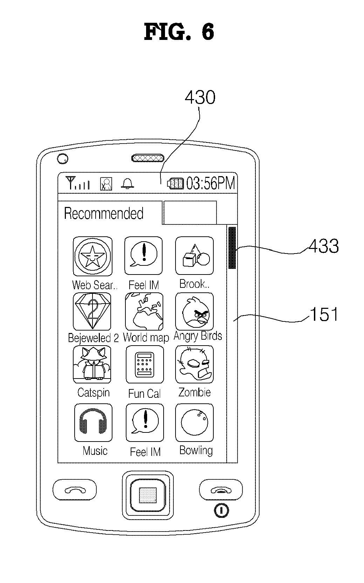

FIG. 6 illustrates a view of an application selection screen according to one embodiment of the present invention. Referring to FIG. 6, the mobile terminal 100 is connected to a webstore, and an application recommendation condition is set based on the current weather or a user's history of downloads, such as an application recommendation that specifies a game category. Accordingly, game applications that can be downloaded from the webstore are searched for or located.

Thereafter, a display screen 430 for displaying located applications and for facilitating selection of one of the game applications that can be downloaded from the webstore is displayed on the display module 151. This allows a user to quickly search for a desired game application.

The applications listed on the display screen 430 may be arranged in order of priority. When the number of applications is so large that they cannot all be displayed at the same time, a scrollbar 433 may be provided on the display screen 430 so that the display screen can be scrolled.

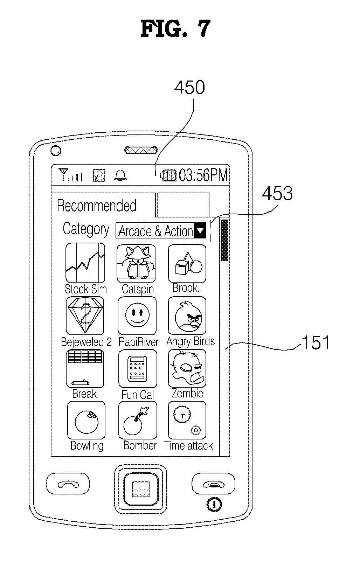

FIG. 7 illustrates a view of an application selection screen according to one embodiment of the present invention. If the mobile terminal 100 displays an application selection screen immediately after it is connected to a webstore, it may be difficult for a user to instantly or readily identify the types of applications listed on the application selection screen. A category region 453 showing the category of applications currently being displayed on the application selection screen 450 may be provided on one portion of an application selection screen 450 on the display module 151. Alternatively, an application recommendation condition may be displayed on the application selection screen 450 instead of the category of the current applications.

The category region 453 may include a dropdown menu for facilitating selection of a category of applications for display. Thus, it is possible for a user to select a desired application category from the category region 453 by scrolling the dropdown menu.

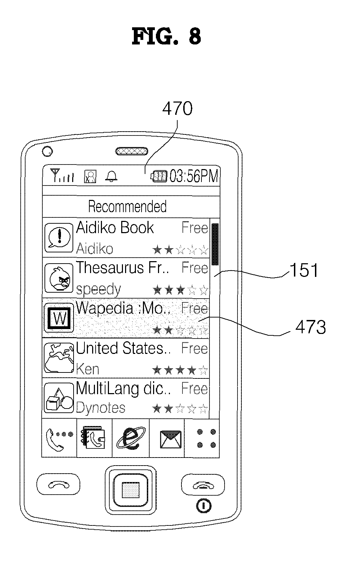

FIG. 8 illustrates a view of an application selection screen according to one embodiment of the present invention. Referring to FIG. 8, an application selection screen 470 shows icons representing applications that can be downloaded and additional descriptions of the icons, such as textual descriptions regarding the icons, in case the types of the applications are not instantly or readily identifiable based on the icons.

A most highly recommended application 473 may be displayed on the application selection screen 470 using a different color or shape relative to other applications such that it is easily distinguishable or more readily identifiable. In this way, it is possible for a user to more quickly search for a desired application to be downloaded.

As described herein, by providing an application selection screen showing a number of applications that meet or satisfy a predefined application recommendation condition, it is possible to allow a user to more quickly search for and download desired applications.

Embodiments of the present invention can be implemented as code that can be read by a processor, such as a mobile station modem (MSM), included in a mobile terminal and that can be written on a computer-readable recording medium. The computer-readable recording medium may be any type of recording device in which data is stored in a computer-readable manner.

Examples of the computer-readable recording medium include a ROM, a RAM, a CD-ROM, a magnetic tape, a floppy disc, an optical data storage medium, and a carrier wave for data transmission through the Internet. The computer-readable recording medium can be distributed over a plurality of computer systems connected to a network such that computer-readable code is written to and executed from the plurality of computer systems in a decentralized manner. Specific functional programs, code, and code segments needed for implementing embodiments of the present invention may readily be written by one of ordinary skill in the art.

As described herein, according to embodiments of the present invention, it is possible to provide an application selection screen showing a number of applications that meet a predefined application recommendation condition set based on the time at which a webstore is accessed, the weather at the time the webstore is accessed, and/or the location at which the webstore is accessed. In this way, it is possible for a user to quickly search for and download desired applications through the application selection screen.

While the present invention has been shown and described with reference to certain embodiments, it will be appreciated by those of ordinary skill in the art that various changes in form and details may be made without departing from the spirit and scope of the present invention as defined by the following claims.

## Claims

1. A method of controlling operation of a mobile terminal, the method comprising:
accessing (S205) a webstore;
searching the webstore to locate applications that meet a predefined application recommendation condition; and
controlling a display module (151) to display an application selection screen to facilitate downloading of one of the located applications.

2. The method of claim 1, further comprising setting the predefined application recommendation condition based on at least a time at which the webstore is accessed, a weather condition at the time at which the webstore is accessed, or a location at which the webstore is accessed, or based on at least preferences and/or demands of a user, an association with specific events, an association with augmented reality, or an association with an accessory to the mobile terminal.

3. The method as claimed in any one of the preceding claims, further comprising randomly setting the predefined application recommendation condition upon receiving a request for a random recommendation.

4. The method as claimed in any one of the preceding claims, further comprising downloading (S235) the one of the located applications according to a selection (S230) made via the application selection screen.

5. The method as claimed in any one of the preceding claims, further comprising controlling the display module (151) to display icons corresponding to the located applications and/or textual descriptions regarding the icons on the application selection screen and/or to display one or more highly-recommended applications of the located applications such that the one or more highly-recommended applications are easily distinguishable from other applications of the located applications and/or to display highly-recommended applications of the located applications above other applications of the located applications.

6. The operation control method as claimed in any one of the preceding claims, further comprising controlling the display module (151) to display a category of the located applications on one predetermined portion of the application selection screen and/or to display the predefined application recommendation condition on one predetermined portion of the application selection screen.

7. The method as claimed in any one of the preceding claims, further comprising controlling the display module (151) to display a scrollbar (433) on one predetermined portion of the application selection screen to facilitate scrolling the application selection screen.

8. The operation control method as claimed in any one of the preceding claims, further comprising controlling the display module (151) to display a second application selection screen upon receiving a predefined user input.

9. The method as claimed in any one of the preceding claims, further comprising controlling the display module (151) to display a menu to facilitate setting the predefined application recommendation condition.

10. A mobile terminal comprising:
a wireless communication unit (110) for providing an interface for accessing a webstore via the Internet;
a display module (151) for displaying information; and
a controller (180) for accessing the webstore via the wireless communication unit (110), searching the webstore to locate applications that meet a predefined application recommendation condition, and controlling the display module (151) to display an application selection screen to facilitate downloading of one of the located applications.

11. The mobile terminal of claim 10, wherein the predefined application recommendation condition is set based on at least a time at which the webstore is accessed, a weather condition at the time at which the webstore is accessed, or a location at which the webstore is accessed and/or based on at least preferences and/or demands of a user, an association with specific events, an association with augmented reality, or an association with an accessory to the mobile terminal.

12. The mobile terminal of claim 10 or 11 , further comprising a memory (160), wherein the controller (180) is further adapted to download a selected one of the located applications to the memory (160).

13. The mobile terminal as claimed in any one of the preceding claims, wherein the controller (180) is further adapted to control the display module (151) to display a second application selection screen upon receiving a predefined user input.

14. The mobile terminal as claimed in any one of the preceding claims, wherein the controller (180) is further adapted to control the display module (151) to display a category of the located applications on one predetermined portion of the application selection screen.

15. The mobile terminal as claimed in any one of the preceding claims, wherein the controller (180) is further adapted to control the display module (151) to display the predefined application recommendation condition on one predetermined portion of the application selection screen.
